# EUROPEAN PATENT SPECIFICATION

(11) **EP 3 232 367 B1**
(45) Date of publication and mention of the grant of the patent: **03.11.2021**
(21) Application number: 17163708.5
(22) Date of filing: 29.03.2017
(51) Int. Cl.: G06K 7/10, G06K 7/12

(54) **IMAGING BARCODE READER WITH COLOR SEPARATED AIMER AND ILLUMINATOR**
STRICHCODELESER MIT BILDGEBUNG MIT FARBSEPARIERTER ZIEL- UND BELEUCHTUNGSVORRICHTUNG
LECTEUR DE CODE À BARRES PAR IMAGERIE AVEC VISEUR À SÉPARATION DES COULEURS ET ILLUMINATEUR

(30) Priority: 15.04.2016 CN 201610233259; 15.04.2016 CN 201620314790 U; 28.03.2017 US 201715470971
(43) Date of publication of application: 18.10.2017
(73) Proprietor: Hand Held Products, Inc., Fort Mill, SC 29707 (US)
(72) Inventor: FENG, Chen, Morris Plains, NJ New Jersey 07950 (US); REN, Jie, Morris Plains, NJ New Jersey 07950 (US)
(74) Representative: Haseltine Lake Kempner LLP

(56) References cited:
- US-A1- 2003 034 394
- US-A1- 2005 167 507
- US-A1- 2005 218 231
- US-A1- 2009 168 117
- US-A1- 2012 006 895
- US-A1- 2015 053 769
- US-A1- 2015 254 485

## Description

### FIELD OF THE INVENTION

The present invention relates to a method and apparatus for decoding machine-readable symbols, and more particularly, to a method and apparatus for aiming a symbol reader and illuminating the machine-readable symbol.

### BACKGROUND

Machine-readable symbols (MRSs) provide a means for encoding information in a compact printed form (or embossed form) which can be scanned and then interpreted by an optical-based symbol detector. Such machine-readable symbols are often attached to (or impressed upon) product packaging, food products, general consumer items, machine parts, equipment, and other manufactured items for purposes of machine-based identification and tracking.

One exemplary type of machine-readable symbol is a bar code that employs a series of bars and white spaces vertically oriented along a single row. Groups of bars and spaces correspond to a codeword. The codeword is associated with an alpha-numeric symbol, one or more numeric digits, or other symbol functionality.

To facilitate encoding of greater amounts of information into a single machine-readable symbol, two-dimensional (2D) bar codes have been devised. These are also commonly referred to as stacked, matrix and/or area bar codes. 2D matrix symbologies employ arrangements of regular polygon-shaped cells (also called elements or modules), typically squares. The specific arrangement of the cells in 2D matrix symbologies represents data characters and/or symbology functions.

Patent document number US2003/0034394 describes an imaging module adapted so that a position of a lens assembley can be finely adjusted relative to a position of an image sensor. A retainer and lens assembly are complimentary configured so that the lens assembly is slidably received in the retainer. The retainer includes two apertures defined in sidewalls thereof. The first aperture accommodates a fixture pin for use in finely adjusting the position of the lens assembly within the retainer. The second aperture accommodates an adhesive material for adhesively bonding the lens assembly to the retainer.

Patent document number US2005/0167507 describes a portable instrument which incorporates an electro-optical assembly for reading indicia during a reading mode, and for projecting a bit-mapped color image during a display mode. A manually operable switch on the instrument is disposed for selecting one of the modes. The color image is formed by pulsing a plurality of differently colored lasers at selected times on selected scan lines.

In this document the terms "barcode" and "symbol" are employed interchangeably, both generally referring to machine-readable symbols, whether linear or two-dimensional.

Symbol readers (or barcode readers), also referred to as scanners, are employed to read the matrix symbols using a variety of optical scanning electronics and methods. In order to properly scan a symbol, the symbol must be within a field of view of a reader. Some readers are hand-held, and can be aimed at a symbol; other readers are fixed in location, and a symbol (and the object to which the symbol is attached) must be placed within a field of view of the reader.

Either way, a symbol scanner may project an "aimer pattern" or "aimer beam" -- a pattern of light -- which may indicate the scanner's center of the field-of-view; the aimer pattern may also project/include corner patterns to indicate the edges of the field of view. Proper alignment or overlap of the projected aimer pattern with the target symbol indicates that the scanner is properly aimed for scanning.

Once the scanner and symbol are properly aligned to have the symbol in the field of view of the scanner, the scanner proceeds with image capture via an imaging element. The aimer beam typically must be turned off when the imaging element captures a symbol image, because the aimer pattern is visible to the imager and becomes noise superimposed on the symbol. Existing aimers, even if centered on a specific color (red, amber, green), all have high intensity in wavelengths to which the image sensors are sensitive. As a result, aimer illumination of a symbol is easily captured, which can disrupt symbol interpretation. In other words, the imager cannot reliably capture the symbol's image when aimer is on. This is true for most commonly used image sensors with electronic rolling shutters. Consequently, the time spent with the aimer being "on" (illuminating the symbol) directly reduces the imager barcode reader response speed.

In the alternative, for global shutter image sensors, reduced response speed may be less of a problem, as the aimer can be on during the shutter-closed portion of the whole image capture cycle. But for the global shutter image sensors, the short on-period aimer also becomes less visible because of the limitation of the aimer light source output power. An on-and-off aimer also introduces a flashing pattern which induces eye fatigue in users.

One approach to resolving this problem is to use a constant-on aimer with less contribution to the overall image illumination; for example the aimer pattern may be thin or have dotted line patterns. However, for 2D symbols with high density, poor print quality, or with 2D codes with lower redundancy rates, this trade-off will introduce poor decode rate.

Therefore, there exists a need for a system and method for both aimer illumination and symbol capture illumination which avoids time-sharing between the aiming process and symbol capture, yet still achieves a high level of accurate performance in symbol decoding.

### SUMMARY

The present invention in its variopus aspects is as set out in the appended claims. This enables the symbol scanner to capture the symbol image even while the aimer-light is always on. In one embodiment, the color separation may be achieved by adding a color blocking filter to block the aimer pattern from reaching the image sensor. The image sensor then becomes effectively color-blind to the aimer color. The image captured with such device is aimer pattern free.

Alternatively, and outside the scope of the present invention, the color separation can be also implemented via software image processing with commonly used color image sensors, without the need of color blocking filter. However, software color-image filtering may result in some degradation to the image quality; may reduce decode performance; may introduce longer decode time; or may necessitate increased processor cost.

Some of the advantages of a color separated aimer, may include:
- The aimer pattern can be full frame, indicating complete frame of the field-of-view (FOV), center mark, as well as a near center best decode zone;
- the aimer pattern can also include some indicating marks, such as decode status (for example, ready to trigger, busy in decoding, success decode or failure decode);
- the aimer pattern can also possibly indicate decode condition, such as too far or too close for decoding.

### BRIEF DESCRIPTION OF THE DRAWINGS

FIG. 1 is a perspective view of an exemplary hand-held symbol reader acquiring data from a machine-readable symbol.
FIG. 2 is an internal block diagram of an exemplary symbol reader for acquiring data from a machine-readable symbol.
FIG. 3 is an internal block diagram of an exemplary symbol reader for acquiring data from a machine-readable symbol.
FIG. 4 is an exploded view of internal structural components of an exemplary symbol reader for acquiring data from a machine-readable symbol.
FIG. 5 illustrates spectrum properties of several exemplary lights sources which may be employed in conjunction with an exemplary symbol reader for acquiring data from a machine-readable symbol.
FIG. 6 illustrates spectrum properties of several exemplary optical filters which may be employed in conjunction with an exemplary symbol reader for acquiring data from a machine-readable symbol.
FIG. 7 is a flow-chart of an exemplary method, performed by an exemplary symbol reader, for aiming the symbol reader and reading a symbol via the symbol reader using at least two distinct frequency bands of light.

### DETAILED DESCRIPTION

In the following description, certain specific details are set forth in order to provide a thorough understanding of various embodiments. However, one skilled in the art will understand that the invention may be practiced without these details. In other instances, well-known structures associated with imagers, scanners, and/or other devices operable to read machine-readable symbols have not been shown or described in detail to avoid unnecessarily obscuring descriptions of the embodiments.

### Color, Frequency, and Frequency Bands

Throughout the discussion below, it will be understood that a reference to a "color", a "color of light" or a "frequency of light", whether a generic reference to "color" or a reference to a specific color (such a blue, red, yellow, etc.), may refer not just to a single frequency. Instead, such a reference to a first color or a first frequency may refer to a band of frequencies which is suitably narrow to be distinguished (for example via optical filters) from a second color at a second band of frequencies. So for example, "red" may refer to a range of frequencies (approximately 405 THz to 480 THz) which are associated with the color red as perceived by humans, and which can be distinguished from other colors such as blue (approximately 610 to 665 THz) or yellow (approximately 510 to 540 THz), etc.

A color may refer to the entire range of frequencies conventionally ascribed to a particular color, or to one or more subsets of that range, with the understanding that a particular frequency range selected in practice will be suitable for the specified application (such as imaging a 2D symbol). In different embodiments, different frequency ranges within a general frequency range may be employed (e.g., different bands within the "green spectrum"). In practical application a projected frequency of light, or a received frequency of light, may extend marginally into the frequency band of an adjacent color; or a projected light may have multiple frequency bands, but with a specified frequency or frequency band dominating in intensity to an extent that makes the projected light be effectively of the one dominant frequency band.

It is also understood that in practical application, a specified frequency band may overlap the domain of two or even three common colors (e.g., a specified frequency band may comprise adjacent portions of the green and yellow bands).

The term "broadband," as used herein, refers to a light emission which substantially spans full multiple bands of conventional colors, for example from red through green, or yellow through blue, with no one band being substantially dominant in intensity. "Broadband" may also refer to emissions of multiple bands which are non-adjacent, but typically include multiple different conventionally named colors. "Broadband" may also refer to a light emission which is white, that is, spanning substantially all visible colors (red through blue). In general, the terms "frequency band" or "color" may be understood as being substantially narrower in frequency range, and distinguishable from, a broadband emission.

In many cases in this document, specific colors are not specified, and reference is made rather to a first frequency band or second frequency band; it will be understood that in specific embodiments, particular separate colors may be assigned for each band as suitable for the application at hand.

It will also be understood that while reference is mostly made herein to "colors", "frequencies or light", or "frequency bands", such descriptions could as easily be made in terms of wavelengths of light. The choice of "colors" or "frequencies" is for convenience only. In general, "color" or "colors", and "frequency" or "frequencies", are employed interchangeably in this document.

Listed here for example only, and without limitation, are some of the frequency ranges which may be conventionally assigned to various visible colors:
red: approx. 405 to 480 THz or 700 to 625 nm;
orange: approx. 480 to 510 THz or 625 to 590 nm;
amber: variously assigned at the border of orange and yellow, but typically centered at approx. 504 THz or 595 nm;
yellow: approx. 510 to 540 THz or 590 to 560 nm;
green: approx. 540 to 580 THz or 560 to 520 nm;
cyan: approx. 580 to 610 THz or 520 to 495 nm;
blue: approx. 610 to 665 THz or 495 to 450 nm;
violet: approx. 665 to 790 THz or 450 to 380 nm.
Persons skilled in the art will recognize that specific dividing frequencies or dividing wavelengths between common colors are necessarily somewhat arbitrary, and may vary slightly in descriptions from different sources.

### Symbol Reader

The present system and method embraces devices designed to read machine-readable symbols.

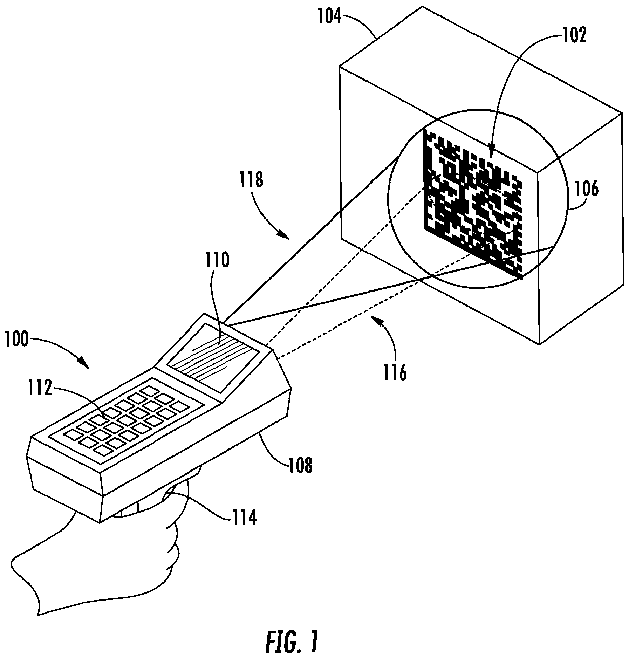

In an exemplary embodiment, such a device may be a hand-held scanner. FIG. 1 is a perspective view of an exemplary hand-held symbol reader 100 acquiring data from a machine-readable symbol 102.

The machine-readable symbol 102 is affixed to a package 104 or the like such that the user points the hand-held symbol reader 100 towards the machine-readable symbol 102, generally using an aiming beam 116 to guide in aiming.

The symbol reader 100 may be a line scanner operable to emit and sweep a narrow beam of electromagnetic energy 118 across a field-of-view 106 over two-dimensional (2D) machine-readable symbol 102. In other embodiments, an aperture means, mirror, lens or the like is adjusted to sweep across a symbol line to receive returning electromagnetic energy from a relatively small portion (e.g., cell) of the machine-readable symbol, which is detected by an optical detector system.

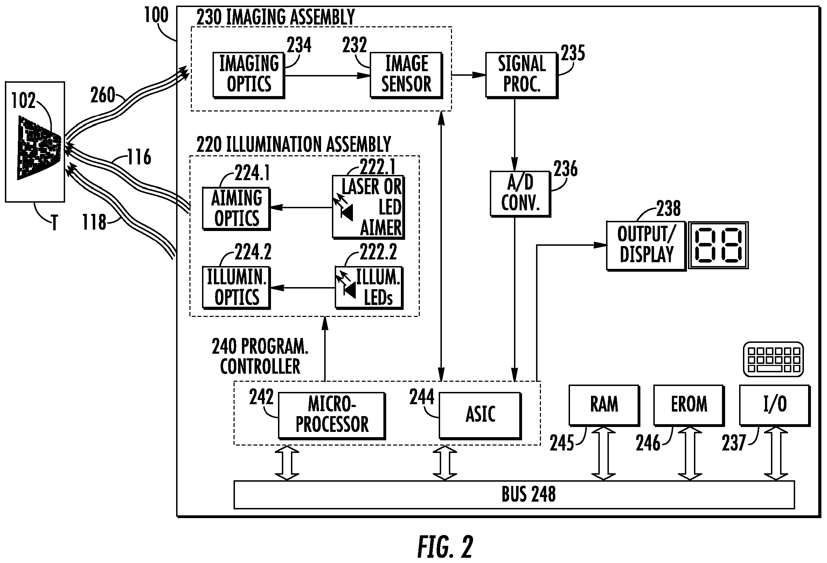

In yet other embodiments, a 2D array symbol reader 100 acquires a captured image of the machine-readable symbol 102(and a suitable region of quiet area around the machine-readable symbol). For the present system and method, the acquisition of a captured image of the symbol may be a preferred method of operation for the symbol reader 100. Suitable image processing hardware 235 and software running on processors 242, 244 (see FIG. 2 below) are used to deconstruct the captured image to determine the data bits represented by the cells.

The machine-readable symbol reader 100 is illustrated as having a housing 108, a display 110, a keypad 112, and an actuator device 114. Actuator device 114 may be a trigger, button, or other suitable actuator operable by the user to initiate the symbol reading process.

The machine-readable symbol 102 shown in the figure is intended to be generic and, thus, is illustrative of the various types and formats of machine-readable symbols. For example, some machine-readable symbols may consist of a single row of codewords (e.g., barcode). Other types of machine-readable symbols (e.g., matrix or area code) may be configured in other shapes, such as circles, hexagons, rectangles, squares and the like. It is intended that many various types and formats of machine-readable symbologies be included within the scope of the present system and method.

### Symbol Reader Internal Block Diagram

FIG. 2. shows an internal block diagram of an exemplary symbol reader 100, which includes elements which may be present in a scanner to support the present system and method.

In one embodiment of the present system and method, the symbol reader 100 may be an optical reader. Optical reader 100 may include an illumination assembly 220 for illuminating a target object T, which has attached or impressed on it a 1D or 2D bar code symbol 102. Optical reader 100 may also include an imaging assembly 230 for receiving an image of object T and generating an electrical output signal indicative of the data which is optically encoded therein.

Illumination assembly 220 may, for example, include one or more illumination source assemblies 222, such as one or more LEDs. Illumination assembly 220 may also include one or more associated illuminating optics and/or aiming optics assemblies 224 for directing illumination light 118 from light source(s) 222 in the direction of target object T. Optics assemblies 224 may include mirrors, rotating mirrors, lenses, or other light focusing or light directing elements (not shown). Two optics assemblies (224.1, 224.2) are illustrated in FIG. 2, but in application a common or integrated optics assembly 224 may be used to focus both aimer light 116 and illumination light 118.

In an embodiment, a first separate light (laser or LED) 222.1 is used to produce the aimer light 116, while a second separate illumination light (typically LED, but may be laser) 222.2 is used to produce reading light 118 to support reading of the symbol 102 by imaging assembly 230. In an alternative embodiment, Aimer LEDs/Laser 222.1 and Illumination LEDs 222.2 may be combined into a single illumination element.

In an embodiment, separate aiming optics 224.1 and illumination optics 224.2 are provided for. In an alternative embodiment, a single optics element or set of optics elements may provide focusing for both aiming and illumination.

Imaging assembly 230 receives reflected light 260 which is reflected from symbol 102. Reflected light 260 may include spectral components of aimer light 116, illumination light 118, or both. In an embodiment, imaging assembly 230 may include an image sensor 232, such as a 2D CCD or CMOS solid state image sensor, together with an imaging optics assembly 234 for receiving and focusing an image of object T onto image sensor 232. The field of view of the imaging assembly 230 will depend on the application. In general, the field of view should be large enough so that the imaging assembly can capture a bit map representation of a scene including an image data reading region at close reading range.

In an embodiment of the present system and method, exemplary symbol reader 100 of FIG. 2 also includes programmable controller 240 which may comprise an integrated circuit microprocessor 242 and an application specific integrated circuit (ASIC) 244. Processor 242 and ASIC 244 are both programmable control devices which are able to receive, output and process data in accordance with a stored program stored in either or both of a read/write random access memory (RAM) 245 and an erasable read only memory (EROM) 246. Processor 242 and ASIC 244 are also both connected to a common bus 248 through which program data and working data, including address data, may be received and transmitted in either direction to any circuitry that is also connected thereto. Processor 242 and ASIC 244 may differ from one another, however, in how they are made and how they are used.

In one embodiment, processor 242 may be a general purpose, off-the-shelf VLSI integrated circuit microprocessor which has overall control of the circuitry of FIG. 2, but which devotes most of its time to decoding image data stored in RAM 245 in accordance with program data stored in EROM 246. Processor 244, on the other hand, may be a special purpose VLSI integrated circuit, such as a programmable logic or gate array, which is programmed to devote its time to functions other than decoding image data, and thereby relieve processor 242 from the burden of performing these functions.

In an alternative embodiment, special purpose ASIC 244 may be eliminated entirely if general purpose processor 242 is fast enough and powerful enough to perform all of the functions contemplated by the present system and method. It will, therefore, be understood that neither the number of processors used, nor the division of labor there between, is of any fundamental significance for purposes of the present system and method.

In an embodiment, exemplary symbol reader 100 includes a signal processor 235 and an analog-to-digital (A/D) chip 236. These chips together take the raw data from image sensor 232 and convert the data to digital format, which in an exemplary embodiment may be a digital format conveying specific colors or color bandwidths, for further processing by programmable controller 240.

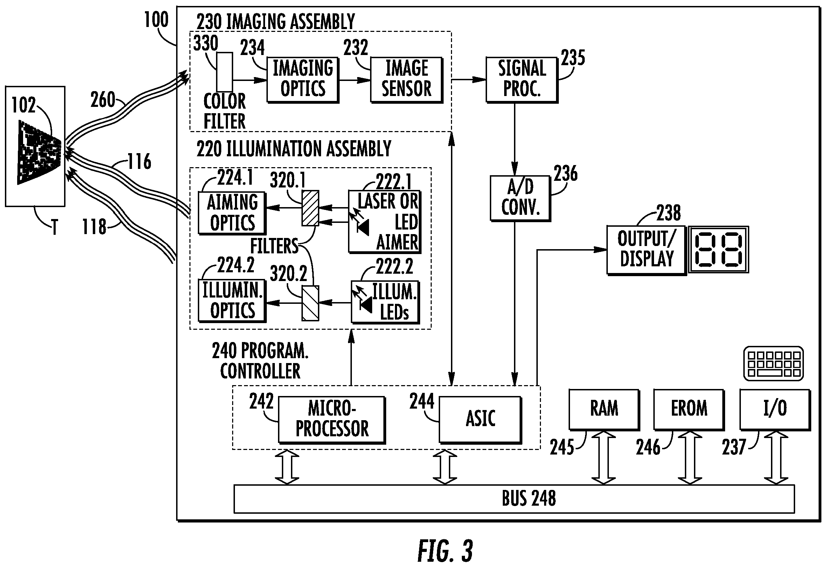

In an embodiment, the system and method of the present invention employs algorithms stored in EROM 246 which enable the programmable controller 240 to analyze the image data from signal processor 235 and A/D 236. In an embodiment, and as described further below, this image analysis may include analyzing color or frequency information (levels of different frequency bands) in the image data. In an embodiment, and in part based on the color analysis, programmable controller 240 may then implement an improved system and method to distinguish a first color provided by the aimer 222.1 (or by an aimer filter 320.1, see FIG. 3) from a second color provided by the illuminator 222.2 (or by an illuminator filter 320.2, see FIG 3).

Exemplary symbol reader 100 may also include input/output (I/O) circuitry 237, for example to support the use of the keyboard 112 and trigger 114. Symbol reader 100 may also include output/display circuitry 238 to support display 110.

### Exemplary Symbol Reader With Color Distinction Between Aimer and Illuminator, and Color Selective Image Sensor

In a conventional symbol reader 100 the light sources 222 -- for example, Aimer LED 222.1 and Illumination LED 222.2 -- whether actually two physical elements or just one physical element, may employ: (i) a common color or frequency of light, or (ii) two similar colors or frequencies (for example, partially overlapping bands) with no separate between the two spectral bands. This may result in interference problems between aimer light 116 projected for aiming the reader 100 and illumination light 118 projected for purposes of optically obtaining the symbol 102. Prior art symbol readers have resolved these interference problems in ways described above in this document, which result in various performance compromises.

The present system and method introduces the use of using at least two different colors, or equivalently, at least two different frequency bands, with at least one such band designated for aimer light 116 and another such band designated for illumination light 118. It will be understood that at least two of the different frequency bands employed respectively for aiming and image acquisition will be substantially non-overlapping. Preferred color frequencies may vary in different embodiments.

A first exemplary embodiment of the present system and method may employ a monochromatic image sensor 232, a blue aimer LED 222.1, and a so-called "white" illumination LED 222.2 which projects principally in the blue and yellow portions of the spectrum. This combination can be effective to discriminate the imaging light 118 from the aimer light 116, because the monochromatic image sensor 232 may have a relatively weak response to the blue frequencies. As a result, the yellow frequencies in the imaging light 118 will dominate in terms affect on the imaging sensor 232, and therefore on imaging the symbol 102; while the blue light (whether from the aimer LED 222.1 or the illumination LED 222.2) will introduce relatively little interference in the imaging process.

A second exemplary embodiment of the present system and method may employ the monochromatic image sensor 232, a blue aimer LED 222.1, and a red or amber (approx. 504 THz or 595 nm) illumination LED 222.2. This combination may avoid the need for a color filter 330 in the imaging assembly 230 (see FIG. 3 below).

A third exemplary embodiment of the present system and method may employ a color image sensor 232, an amber or cyan aimer LED 222.1, and a broadband illumination LED 222.2 or an illumination LED 222.2 with significant spectral intensity in colors other than amber or cyan. This combination can be effective to discriminate the imaging light 118 from the aimer light 116, because the color image sensor 232 may have a relatively weak response to the frequencies associated with amber or cyan.

A fourth exemplary embodiment of the present system and method employs software color filtering. Such an embodiment may use a first designated color for the aimer LED 222.1; at least one second designated color (in a different band from the first) for the illumination LED 222.2; and software image/color processing to remove first designated color (the aimer color) from the signal created by the imaging assembly 230.

This fourth exemplary embodiment may entail the stages of: (i) converting the analog image signal from the imaging assembly 230 to digital form; (ii) performing a Fourier analysis or similar analysis on the digitized signal to identify specific frequency elements; and (iii) removing the frequency elements associated with first designated color.

Possible costs of the fourth exemplary embodiment (the software color-filter approach) may include: (i) some degradation to the image quality, which may reduce decode performance; (ii) color image filtering may increase the decode time; and (iii) a more expensive hardware processor 240 may be required. Some possible advantages of the software filter approach are discussed further below in this document.

The above embodiments are exemplary only. Other combinations of a first color or colors to be projected by the LED aimer 222.1, a second spectrally distinct color or colors to be projected by the illumination LEDs 222.2, and other possible spectral responses by the image sensor 232, may all be envisioned within the scope of the present system and method, as recited in the appended claims.

In various embodiments of the present system and method, the aimer spectrum and the illumination spectrum have at least one common color or one common spectral band, along with whatever color or colors are distinct between the two. In an alternative embodiment, the aimer color(s) and the illumination cclor(s) are substantially distinct from each other, that is, they have no substantial spectral overlap.

### Exemplary Symbol Reader With One or More Color Filters

FIG. 3. shows an internal block diagram of an exemplary symbol reader 100, similar to the exemplary symbol reader 100 of FIG. 2 above, but with additional elements. For many of the elements which are in common between the two exemplary symbol readers (for example, hardware processors 242/244, memory 245/246, bus 248, and others), a description is not repeated below, and may be presumed to be substantially the same as the descriptions provide in conjunction with FIG. 2 above.

In the exemplary symbol reader 100 of FIG. 3, optical filters 330, 320.1, and 320.2 are elements of the imaging assembly 230 or the illumination assembly 220. The filters 320/330 may be made from a variety of materials known in the art (for example, glass, resin plastics, polyester and polycarbonate), and which may for example be dyed to let certain color or bandwidths of light pass through while blocking others. Optical filters may also be known as "photographic filters." Optical filters may be dyed or may be coated to achieve filtering, and multiple frequencies may be filtered by a single filtering element (for example, with coats of multiple different filtering materials).

In the figure, filters 320/330 are shown as elements separate and apart from optics 224/234, and also separate and apart from image sensor 232 and LEDs/laser 222. In an embodiment, some or all of optical filters 320/330 may be structurally separate from these other components 224/234/222/232.

However, persons skilled in the art will recognize that this schematic distinction is for purposes of illustration, and is not limiting. In an alternative embodiment, for example, imaging color filter 330 may be integrated with either of imaging optics 234 or image sensor 232. For example, imaging optics 234 may comprise a lens or lenses which only pass specified frequency bands, or may comprise a mirror or mirrors which only reflect the specified frequency bands, so that imaging optics 234 and imaging color filter 330 are structurally one element.

In an alternative embodiment, for example, aimer color filter 320.1 associated with aiming light 116 may be integrated with either of aiming optics 224.1 or LED aimer 222.1. For example, aiming optics 224.1 may comprise a lens or lenses which only pass specified frequency bands, or may comprise a mirror or mirrors which only reflect the specified frequency bands, so that aiming optics 224.1 and aiming color filter 320.1 are structurally one element. In an alternative embodiment, LED aimer 222.1 may have an integral color filtering element or may be configured to as to only generate a single frequency band, which may limit the color emitted by LED aimer 222.1 to the specified frequency band.

Substantially similar considerations apply to illumination color filter 320.2 associated with illumination optics 224.2 and illumination LEDs 222.2.

It will further be understood by persons skilled in the art that the positions or spatial ordering of the elements shown are for illustration only, and in various embodiments may be altered while achieving substantially the same filtering, optical, illumination, and image capture effects. For example, in the embodiment illustration in FIG. 3, imaging color filter 330 is illustrated as receiving reflected light from symbol 102, which is then partially transmitted (due to the filtering) to imaging optics 234. In an alternative embodiment with alternative structural ordering, the light reflected by symbol 102 may first be received and focused by imaging optics 234, and then filtered by imaging color filter 330.

Similar considerations apply to aiming light and illumination light. For example, in the embodiment illustrated in FIG. 3, light from illumination LEDs 222.2 is first filtered to specified bandwidths by illumination color filter 320.2, and the filtered light is then focused onto symbol 102 by illumination optics 224.2. In an alternative embodiment with an alternative structural ordering of the components, light from illumination LEDs 222.2 is first focused by illumination optics 224.2, and then filtered by illumination color filter 320.2.

Color filters 320.1, 320.2, and 330 generally serve to achieve the illumination and image capture process discussed above, wherein at least a first frequency band is used for purposes of aiming the scanner 100, and at least one distinct second frequency band is used for illuminating the symbol 102 for image capture.

As will be understood by persons skilled in the art, all, some, or none of the filters shown may be necessary to implement the present system and method.

### Nomenclature - Filters and Cut-Filters.

Conventionally, filters are often named for the colors which they allow to pass through, and may also be referred to as **"bandpass filters".** For example, a blue filter may allow the color blue to pass through, while substantially blocking all other colors. As a result, to the eye the filter generally looks "bluish." Similarly, a red filter may allow wavelengths associated with the color red to pass through, making the filter appear "reddish." A **"cut-filter"** or a **"blocking filter"** is a filter which blocks an indicated frequency or color. For example, a "blue-IR cut filter" or "blue blocking filter" blocks frequencies associated with blue (and with infrared), while substantially allowing other frequencies to pass through.

In general in this document, a reference to a blue filter refers to a blue bandpass filter (which lets blue pass through, and so "colors" a white light as blue), a reference to an amber filter refers to an amber bandpass filter which colors white light amber. Where a cut-filter is specifically applicable, it will generally be stated as much in the document, though in some cases the use of a cut-filter may be apparent from context and element usage even when not so stated.

In one exemplary embodiment of the present system and method, the symbol reader 100 may employ a monochrome or color image sensor 232; a blue laser aimer 222.1 or blue LED aimer 222.1, or alternatively a blue aimer color bandpass filter 320.1; and a blue-infrared (IR)-cut filter for both the illumination filter 320.2 and the imaging color filter 330 (and thereby removing the color blue from the illumination light 118). The combination results in an imaging process which excludes the aimer frequency band (blue) from the imaging process.

In an alternative exemplary embodiment employing three filters, laser/LED aimer 222.1 and illumination LEDs 222.2 may both be emitters of broadband light. In such an embodiment, aiming color filter 320.1 may be used to filter the light from LED aimer 222.1 to allow passage of a first frequency band while blocking a second emitted frequency band (which is different from the first); while illumination color filter 320.2 may be used to filter the light from illumination LEDs 222.2 to allow passage of the second frequency band.

Imaging color filter 330, associated with imaging sensor 232, may also be configured to filter received light. Imaging color filter 330 may filter out (remove) the first frequency band which is passed by aimer color filter 320.1 (thereby filtering out the aimer light); while allowing passage of the second frequency which is passed by illumination color filter 320.2 (thereby allowing image sensor 232 to receive the reflected illumination light).

In an alternative embodiment employing two filters, laser/LED aimer 222.1 may emit broadband light but have an aimer color filter 320.1 configured to pass only a first frequency of light (for example, blue), while illumination LEDs 222.2 may emit broadband light and have no associated color filter (so illumination filter 320.2 is not employed). Imaging color filter 330, associated with imaging sensor 232, may also be configured to filter received light. Imaging color filter 330 may filter out (remove) the first frequency band which is passed by aimer color filter 320.1 (thereby filtering out the aimer light); while allowing passage of the remaining broadband frequencies (thereby allowing image sensor 232 to receive all the reflected illumination light, except for the reflected light in the frequency band of the LED aimer 222.1).

In an alternative embodiment employing two filters, laser/LED aimer 222.1 and illumination LEDs 222.2 may have respective color filters 320.1 and 320.2, each configured to allow passage of distinct frequency bands (for example, blue or red for the aimer, but yellow for the illumination light). Image sensor 232 may be a charge-coupled device which is only or principally sensitive to yellow light, and therefore is sensitive mainly to the illumination light only, without requiring imaging color filter 330.

In an alternative embodiment, more than three filters may be employed as well, for example, for purposes of signaling. For example, illumination LEDs 222.2 may have an associated illumination color filter 320.2, which is configured to pass only a first frequency band (red, for example). Image sensor 232 may have an imaging color filter 330 which is configured to pass only the same first frequency band (red, in this case). Laser or LED aimer 222.1 may be a broadband emitter, but with multiple aimer color filters 320.1; different colors, such as blue, green, orange, and violet may then be employed to signal different statuses of scanner 100. In an alternative embodiment, instead of or along with aimer color filter 320.1, scanner 100 may employ multiple aimer LEDs 222.1 which emit different colors of light (a blue LED, a green LED, an orange LED, etc.).

The above combinations of filters are exemplary only. It will be understood by persons skilled in the art that other combinations of filters may be employed as well within the scope of the present system and method, as recited in the appended claims.

### Exemplary Structural Arrangement

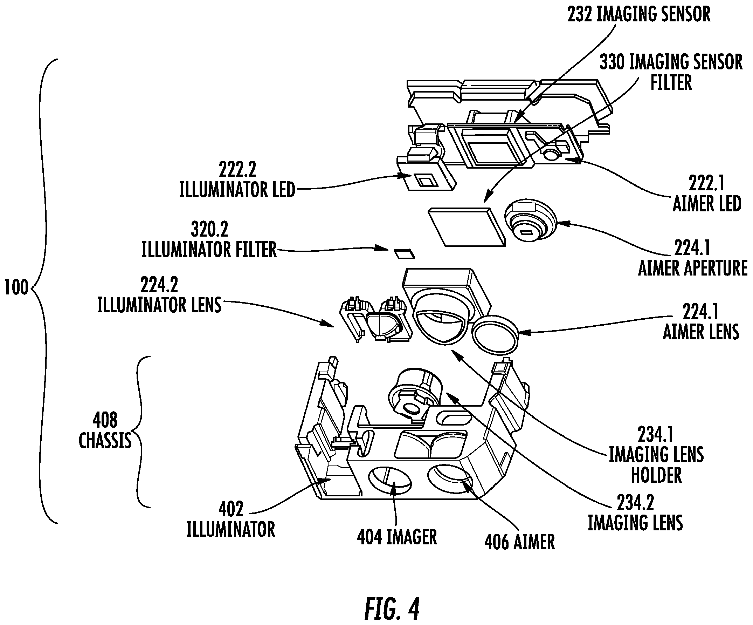

FIG. 4. shows an exploded structural/component view of an exemplary symbol reader 100 according to the present system and method. The relevant component parts are arranged as they might be in an exemplary symbol reader. Labeled in the figure are those elements which are part of imaging assembly 230 and illumination assembly 220. Persons skilled in the art will understand that an operational reader 100 will include other components not shown in the figure, such as processors (242, 244), memory (245, 246), I/O control chips 237, other electronic components (235, 236), power supply elements, circuit boards, etc.

Symbol reader 100 includes image sensor 232, imaging color filter 330, and an imaging lens holder 234.1 and imaging lens 234.2, both elements of imaging optics 234.

Symbol reader 100 also includes illuminator LED 222.2, illuminator color filter 320.2, and illuminator optics/lens 224.2.

Symbol reader 100 also includes aimer LED 222.1, and an aimer aperture 224.1 and aimer lens 224.2, both elements of aiming optics 224.1.

It will be noted that in the embodiment shown the aimer elements do not include a distinct, identifiable aimer color filter 320.1. In one embodiment, and as discussed above, symbol reader 100 may not require an aimer color filter 320.1. In an embodiment, aimer LED 222.1 may be configured to emit light only a limited band or specific color range, eliminating the need for aimer color filter 320.1. In an alternative embodiment, color filtering may be performed by aimer lens 224.1. In an alternative embodiment, a distinct aimer color filter 320.1 (not shown in FIG. 4) may be included at any of several points in the optical path of the aiming elements. In an alternative embodiment, symbol reader 100 may have multiple aimer color filters 320.1, which may be employed for such purposes as signaling a user via different aiming colors.

In an embodiment, aimer aperture 224.1 may be configured to be adjustable, so as to display various graphic images for purposes of user-signaling and instruction. In an alternative embodiment, symbol reader 100 may employ multiple aimer LEDs 222.1, possibly of different colors, to enable or to contribute to signaling via the aimer light.

Symbol reader 100 of FIG. 4 is exemplary only. As noted above, not all elements may be included in all embodiments. For example, the use of different color filters and/or the presence of different color filters 320.1/320.2/330 may vary in different embodiments, with not all filters necessarily being present in all embodiments.

Symbol reader 100 also includes a chassis 408 which holds other components in place and provides an exterior surface for the reader 100, for grasping and holding. The chassis 408 includes forward-placed openings or receptacles configured to provide paths for light coming out of, and going into, the reader 100; as well as for holding and mounting forward optical components. Illuminator receptacle 402 is configured to mount illuminator lens 224.2; imager receptacle 404 is configured to mount imaging lens 234.2 (and possibly imaging lens holder 234.1); aimer receptacle 406 is configured to mount aimer lens 224.1. Chassis 408 may also provides interior mounting receptacles for the other electronic components enumerated above, but not shown in the figure.

### Illumination and Filter Options

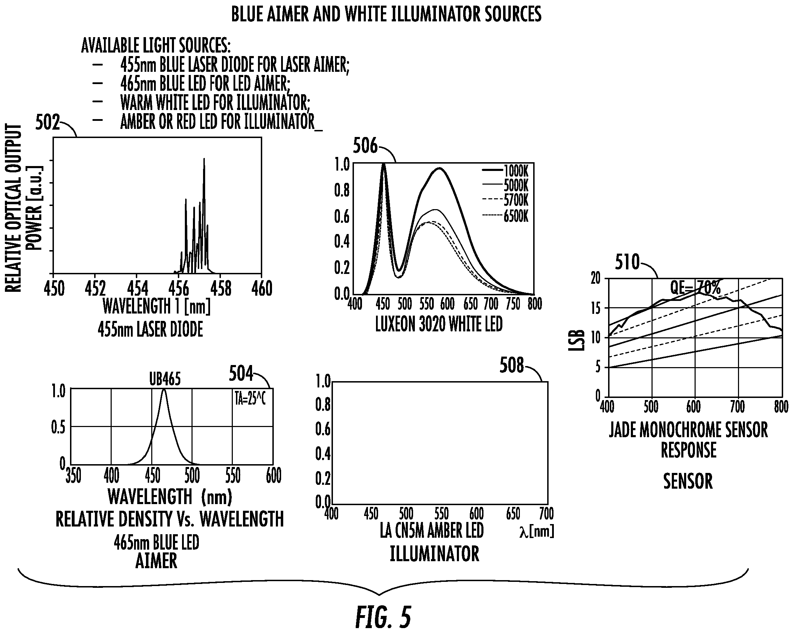

**Illumination:** FIG. 5 provides spectrum plots 502/504/506/508/510 for a variety of scanner light sources 222/232 which may be employed in conjunction with the present system and method, and specifically with an exemplary symbol reader 100 employing a blue aimer source 222.1 and an illuminator/reading-light source 222.2 which is white or red/amber.

In an embodiment, such an exemplary scanner may employ for the aimer LED 222.1, for example, a blue/violet LED emitting in wavelengths from 456 to 458 nm (502); or in an alternative embodiment, a blue/violet Laser diode emitting in wavelengths from approximately 435 nm to 500 nm, with a peak center wavelength of about 465 nm (504). In an alternative embodiment, such wavelengths may also be generated, in whole or part, by a combination of an aimer light source 222.1 and a suitable aimer color filter 320.1.

In an embodiment, such an exemplary scanner may employ for the illumination/reading LED 222.2, for example, a broad spectrum white LED with two or more wavelength peaks (506); or in an alternative embodiment a red/amber LED with a peak wavelength of about 625 nm (508). In an alternative embodiment, such wavelengths may also be generated, in whole or part, by a combination of an illuminator light source 222.2 and a suitable illuminator color filter 320.2.

In an embodiment, such an exemplary scanner may employ for the image sensor 232 a charge-coupled device or similar sensing element with a substantially broadband, frequency-insensitive (i.e., monochrome) spectral response (510) .

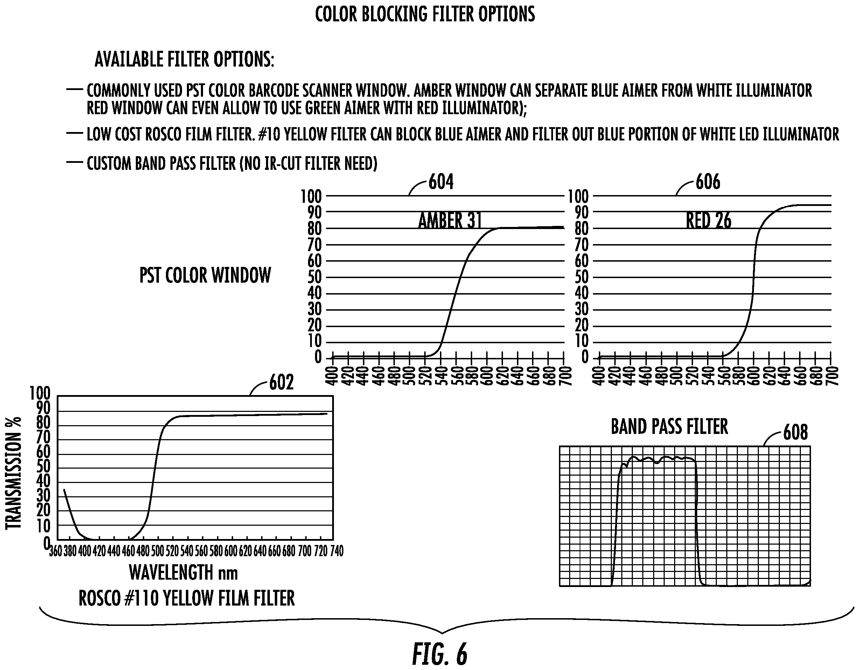

**Optical Filters:** FIG. 6 provides spectrum plots 602/604/606/608 for a variety of optical color filters 320/330 which may be employed in conjunction with an exemplary symbol reader 100 according to the present system and method.

In an embodiment, an exemplary scanner 100 may employ for the image sensor color filter 330 an amber band-pass filter (604), which would block aimer illumination 116 from a blue aimer 222.1 while still allowing the reading light 118 from a white illuminator 222.2.

In an alternative embodiment, an exemplary scanner 100 may employ for the image sensor color filter 330 a red band-pass filter (606), which would block aimer illumination 116 from a green aimer 222.1 while passing the reading light 118 from a red illuminator 222.2.

In an alternative embodiment, an exemplary scanner 100 may employ for the image sensor color filter 330 a yellow band-pass filter (602), which would block aimer illumination 116 from a blue aimer 222.1, and also block the blue portion of reading light 118 from a white LED illuminator 222.2; but would still pass other frequencies of reading light from the white LED illuminator 222.2.

In an alternative embodiment, an exemplary scanner 100 may employ for the image sensor color filter 330 a custom band-pass filter (602), which would block aimer illumination 116 from reaching the image sensor 232; but would still pass other frequencies of reading light from the white LED illuminator 222.2 through to the image sensor 232.

### Light Band and Filter Design Optimization

In application of the present system and method, persons skilled in the art will appreciate that it is desirable to optimize the selection of light bands 116, 118and the concomitant choice of filters 320 -- with a view towards optimizing performance of a scanner 100. A variety of considerations and factors may come into play for optimization. These include, for example and without limitation:
**(1) Human eye response and perception:** The color for the aimer light 116, and associated filter 320.1 selection (if a filter is used) may be selected with a view towards providing the best contrast for the aimer, to aid the user with readily aiming the scanner 100 with minimal eye strain.
**(2) Signal-to-noise ratio optimization:** Both the aimer light 116 and illumination light 118 may be selected with a view towards achieving the best signal-to-noise ratio for the image sensor 232. In practice, this may entail selecting an aimer light 116 which is as spectrally remote as possible from the frequencies in which the image sensor 232 is most responsive.
**(3) Ambient-light contribution:** In real-world application, ambient light will contribute to the image signal. Ambient light typically includes natural day light, artificial indoor lightings, and combinations thereof. The light band selection 116, 118 and filter 320 design may be optimized based on the statistics of these contributions, to achieve the best aimer visibility and image sensitivity.

**Application of software-based color filtering:** In real-world usage of the scanner 100, ambient lighting conditions may vary. As result, dynamic discriminations of light bands for aiming and detection may result in optimum scanner performance in varied environments. The software color-filtering approach has already been discussed above. Software filtering can have the advantage of providing real-time optimization of the image sensor 232 detection criteria, to achieve the best separation between aimer light 116 and wanted-image lighting under various application environments. With scene analysis and spectral analysis, the unwanted aimer pattern can be isolated out from the image.

### Exemplary Method

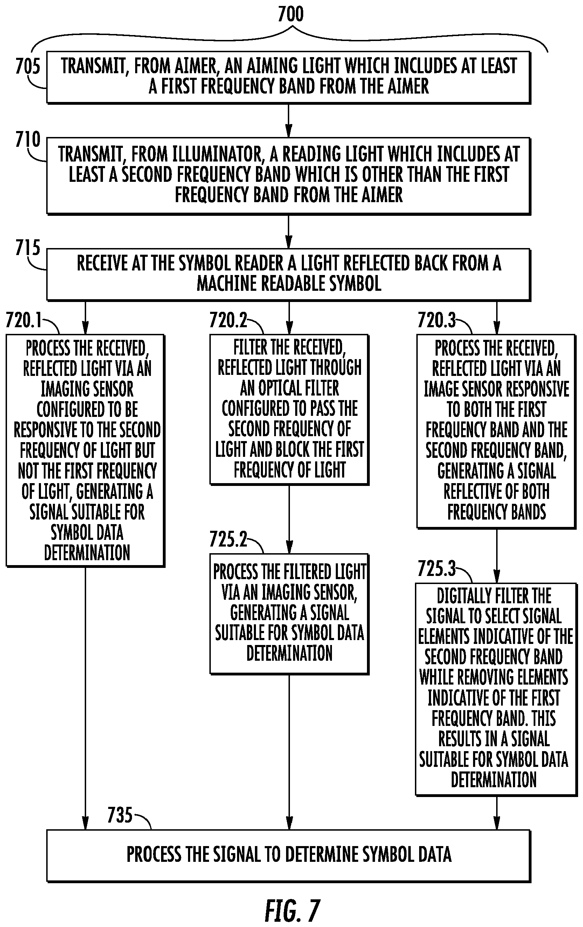

FIG. 7 presents a flow chart of an exemplary method for reading a machine-readable symbol 102 by an exemplary symbol reader 100. The method may branch into alternative paths, depending on a particular hardware and/or software configuration of the exemplary scanner 100.

The method begins with either or both of steps 705 and 710, which in an embodiment may be performed in the order shown; in an alternative embodiment may be performed in a reverse order (that is, step 710 before step 705); and in an alternative embodiment, performed simultaneously.

In step 705 the reader 100 transmits from an aimer 222.1 and possibly an associated color filter 320.1, an aiming light 116 which includes at least a first frequency band of light, but which excludes (or substantially minimizes) at least one second frequency band of light which is other than the first frequency band.

In step 710 the reader 100 transmits from an illuminator 222.2 and possibly an associated color filter 320.2, a reading light 118 which includes at least the second frequency band which is other than the first frequency band from the aimer 222.1.

In step 715 the symbol reader receives a light reflected back from a machine-readable symbol.

In a first embodiment, the symbol reader has an imaging sensor 232 configured to be responsive to the second frequency of light but not the first frequency of light. Continuing from step 715, in step 720.1 the image sensor 232 so configured generates an electrical signal representative of the second frequency of light and suitable for symbol data determination. In step 735, the symbol reader 100 determines, from the electrical signal, the symbol data.

In an alternative second embodiment, the symbol reader has an imaging sensor 232 which may be responsive to both the first frequency of light and the second frequency of light. Continuing from step 715, in step 720.2 the reflected, received light is processed through an optical filter configured to pass the second frequency of light and to block the first frequency of light. In step 725.2, the filtered light is received by the image sensor 232, which then generates an electrical signal representative of the second frequency of light and suitable for symbol data determination. In step 735, the symbol reader 100 determines, from the electrical signal, the symbol data.

In an alternative third embodiment, the symbol reader has an imaging sensor 232 which may be responsive to both the first frequency of light and the second frequency of light. Continuing from step 715, in step 720.3 the image sensor generates an electrical signal responsive to both the first frequency band and the second frequency band, generating an electrical signal reflective of both frequency bands. In step 725.3, symbol reader 100 digitally filters the electrical signal to select signal elements indicative of the second frequency band, while removing elements indicative of the first frequency band. In step 735, the symbol reader 100 determines, from the electrical signal, the symbol data.

### Summary

An exemplary symbol reader 100 employs at least two separate colors or frequency bands to illuminate a machine-readable symbol. The first frequency band is used to illuminate the symbol in order to assistant with aiming the reader. The second frequency is used to provide illumination for actually reading the symbol. By employing two separate frequency bands, it is possible to aim the symbol reader 100, and read the machine-readable symbol 102, engaging in both operations concurrently, without degradation of signal integrity and without lowering the reliability of the symbol reading process.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation.

The foregoing detailed description has set forth various embodiments of the devices and/or processes via the use of block diagrams, flow charts, schematics, exemplary data structures, and examples. Insofar as such block diagrams, flow charts, schematics, exemplary data structures, and examples contain one or more functions and/or operations, it will be understood by those skilled in the art that each function and/or operation within such block diagrams, flowcharts, schematics, exemplary data structures, or examples can be implemented, individually and/or collectively, by a wide range of hardware, software, firmware, or virtually any combination thereof.

In one embodiment, the present subject matter may be implemented via Application Specific Integrated Circuits (ASICs). However, those skilled in the art will recognize that the embodiments disclosed herein, in whole or in part, can be equivalently implemented in standard integrated circuits, as one or more computer programs running on one or more computers (e.g., as one or more programs running on one or more computer systems), as one or more programs running on one or more controllers (e.g., microcontrollers) as one or more programs running on one or more processors (e.g., microprocessors), as firmware, or as virtually any combination thereof, and that designing the circuitry and/or writing the code for the software and or firmware would be well within the skill of one of ordinary skill in the art in light of this disclosure.

In addition, those skilled in the art will appreciate that the control mechanisms taught herein are capable of being distributed as a program product in a variety of tangible forms, and that an illustrative embodiment applies equally regardless of the particular type of tangible instruction bearing media used to actually carry out the distribution. Examples of tangible instruction bearing media include, but are not limited to, the following: recordable type media such as floppy disks, hard disk drives, CD ROMs, digital tape, flash drives, and computer memory.

The various embodiments described above can be combined to provide further embodiments. These and other changes can be made to the present systems and methods in light of the above-detailed description. In general, in the following claims, the terms used should not be construed to limit the invention to the specific embodiments disclosed in the specification and the claims, but should be construed to include all machine-readable symbol scanning and processing systems and methods that read in accordance with the claims. Accordingly, the invention is not limited by the disclosure, but instead its scope is to be determined entirely by the following claims.

## Claims

1. A scanner (100) providing a reading frequency different from an aiming frequency, comprising:
an aimer (222.1) configured to provide aiming light having the aiming frequency to support aiming of the scanner (100) at a machine-readable symbol, MRS (102);
an illuminator (222.2) configured to provide reading light, comprising a first plurality of frequencies, which illuminates the MRS (102) to support optical reading of the MRS (102), wherein the first plurality of frequencies comprises at least the reading frequency; and
an imaging sensor (232) having an optical filter (330) configured to receive reflected light from the MRS (102), wherein the reflected light includes a reflected aiming light and a reflected reading light, wherein the optical filter (330) is configured to block the reflected aiming light of the aiming frequency, the imaging sensor (232) being configured to:
receive the reflected light from the MRS (102), and
convert the reflected light to an electrical signal suitable for signal processing by the scanner (100);
**characterized in that** the scanner (100) comprises an illuminator filter (320.2) integrated in the illuminator (222.2) that is configured to block the aiming frequency in the reading light provided by the illuminator (222.2).

2. The scanner (100) of claim 1, wherein:
the aiming light comprising a second plurality of frequencies, and
the imaging sensor (232) is configured to be non-responsive to the second plurality of frequencies of the aiming light.

3. The scanner (100) of claim 1, wherein:
the aiming light comprises a second plurality of frequencies, and
the optical filter (330) is configured to allow passage of light having the reading frequency and block light having the second plurality of frequencies.

4. The scanner (100) of claim 1, further comprising:
an aimer filter (320.1) associated with the aimer (222.1) configured to block the first plurality of frequencies.

5. The scanner (100) of claim 1, wherein the aimer (222.1) is configured to generate a visual indicator of at least one of:
a data of the machine-readable symbol (102);
an instruction for operation of the scanner (100);
decode status, from among ready to trigger, busy in decoding, success decode, and failure decode;
decode condition, from among too far for decoding and too close for decoding.

6. The scanner (100) of claim 5, wherein the aimer (222.1) is configured to generate the visual indicator by:
emitting a plurality of colors to signal the decode status or decode condition.

7. The scanner (100) of claim 1, wherein:
the aimer (222.1) and the illuminator (222.2) are configurable to be operable simultaneously.

8. The scanner (100) of claim 1, wherein the aimer (222.1) is configured to emit a full-frame light pattern comprising a complete field-of-view of the MRS (102).

9. The scanner (100) of claim 1, wherein the imaging sensor (232) comprises:
a signal processing module (235) configured to remove, from the electrical signal, a signal element representative of the reflected aiming light.

## Patentansprüche

1. Scanner (100), der eine Lesefrequenz bereitstellt, die sich von einer Zielfrequenz unterscheidet, umfassend:
eine Zielvorrichtung (222.1), die konfiguriert ist, um Ziellicht bereitzustellen, das die Zielfrequenz aufweist, um das Zielen des Scanners (100) auf ein maschinenlesbares Symbol, MRS (machine-readable symbol) (102) zu unterstützen;
eine Beleuchtungsvorrichtung (222.2), die konfiguriert ist, um Leselicht bereitzustellen, umfassend eine erste Mehrzahl von Frequenzen, die das MRS (102) beleuchtet, um das optische Lesen des MRS (102) zu unterstützen, wobei die erste Mehrzahl von Frequenzen mindestens die Lesefrequenz umfasst; und
einen Bildgebungssensor (232), der einen optischen Filter (330) aufweist, der konfiguriert ist, um reflektiertes Licht von dem MRS (102) zu empfangen, wobei das reflektierte Licht ein reflektiertes Ziellicht und ein reflektiertes Leselicht einschließt, wobei der optische Filter (330) konfiguriert ist, um das reflektierte Ziellicht der Zielfrequenz zu blockieren, wobei der Bildgebungssensor (232) konfiguriert ist zum:
Empfangen des reflektierten Lichts von dem MRS (102), und
Umwandeln des reflektierten Lichts in ein elektrisches Signal, das zur Signalverarbeitung durch den Scanner (100) geeignet ist;
**dadurch gekennzeichnet, dass** der Scanner (100) einen Beleuchtungsvorrichtungsfilter (320.2) umfasst, der in die Beleuchtungsvorrichtung (222.2) integriert ist, der konfiguriert ist, um die Zielfrequenz in dem von der Beleuchtungsvorrichtung (222.2) bereitgestellten Leselicht zu blockieren.

2. Scanner (100) nach Anspruch 1, wobei:
das Ziellicht eine zweite Mehrzahl von Frequenzen umfasst, und
der Bildgebungssensor (232) konfiguriert ist, um nicht auf die zweite Mehrzahl von Frequenzen des Ziellichts anzusprechen.

3. Scanner (100) nach Anspruch 1, wobei:
das Ziellicht eine zweite Mehrzahl von Frequenzen umfasst, und
der optische Filter (330) konfiguriert ist, um Licht durchzulassen, das die Lesefrequenz aufweist, und Licht zu blockieren, dass die zweite Mehrzahl von Frequenzen aufweist.

4. Scanner (100) nach Anspruch 1, ferner umfassend:
einen Zielvorrichtungsfilter (320.1), der der Zielvorrichtung (222.1) zugeordnet ist, der konfiguriert ist, um die erste Mehrzahl von Frequenzen zu blockieren.

5. Scanner (100) nach Anspruch 1, wobei die Zielvorrichtung (222.1) konfiguriert ist, um einen visuellen Indikator zu erzeugen von mindestens einem von:
Daten des maschinenlesbaren Symbols (102);
einer Anweisung zum Betrieb des Scanners (100);
Decodierungsstatus, aus bereit zum Auslösen, beschäftigt mit Decodierung,
erfolgreicher Decodierung und nicht erfolgreicher Decodierung;
Decodierungsbedingung, aus zu weit für die Decodierung und zu nah für die Decodierung.

6. Scanner (100) nach Anspruch 5, wobei die Zielvorrichtung (222.1) konfiguriert ist, um den visuellen Indikator zu erzeugen durch:
Emittieren einer Mehrzahl von Farben, um den Decodierungsstatus oder die Decodierungsbedingung zu signalisieren.

7. Scanner (100) nach Anspruch 1, wobei:
die Zielvorrichtung (222.1) und die Beleuchtungsvorrichtung (222.2) konfigurierbar sind, um gleichzeitig betreibbar zu sein.

8. Scanner (100) nach Anspruch 1, wobei die Zielvorrichtung (222.1) konfiguriert ist, um ein Vollbild-Lichtmuster auszusenden, umfassend ein vollständiges Sichtfeld des MRS (102).

9. Scanner (100) nach Anspruch 1, wobei der Bildgebungssensor (232) umfasst:
ein Signalverarbeitungsmodul (235), das konfiguriert ist, um aus dem elektrischen Signal ein Signalelement zu entfernen, das für das reflektierte Ziellicht repräsentativ ist.

## Revendications

1. Dispositif de balayage (100) fournissant une fréquence de lecture différente d'une fréquence de visée, comprenant :
un viseur (222.1) conçu pour fournir une lumière de visée ayant la fréquence de visée pour prendre en charge la visée du dispositif de balayage (100) sur un symbole lisible par machine, MRS (machine-readable symbol) (102) ;
un illuminateur (222.2) conçu pour fournir une lumière de lecture, comprenant une première pluralité de fréquences, qui éclaire le MRS (102) pour prendre en charge la lecture optique du MRS (102), dans lequel la première pluralité de fréquences comprend au moins la fréquence de lecture ; et
un capteur d'imagerie (232) ayant un filtre optique (330) conçu pour recevoir une lumière réfléchie par le MRS (102), dans lequel la lumière réfléchie comprend une lumière de visée réfléchie et une lumière de lecture réfléchie, dans lequel le filtre optique (330) est conçu pour bloquer la lumière de visée réfléchie de la fréquence de visée, le capteur d'imagerie (232) étant conçu pour :
recevoir la lumière réfléchie par le MRS (102) et
convertir la lumière réfléchie en un signal électrique adapté au traitement de signal par le dispositif de balayage (100) ;
**caractérisé en ce que** le dispositif de balayage (100) comprend un filtre d'illuminateur (320.2) intégré dans l'illuminateur (222.2) qui est conçu pour bloquer la fréquence de visée dans la lumière de lecture fournie par l'illuminateur (222.2).

2. Dispositif de balayage (100) selon la revendication 1, dans lequel :
la lumière de visée comprenant une seconde pluralité de fréquences et
le capteur d'imagerie (232) est conçu pour ne pas réagir à la seconde pluralité de fréquences de la lumière de visée.

3. Dispositif de balayage (100) selon la revendication 1, dans lequel :
la lumière de visée comprend une seconde pluralité de fréquences et
le filtre optique (330) est conçu pour permettre le passage de la lumière ayant la fréquence de lecture et pour bloquer la lumière ayant la seconde pluralité de fréquences.

4. Dispositif de balayage (100) selon la revendication 1, comprenant en outre :
un filtre de viseur (320.1) associé au viseur (222.1), conçu pour bloquer la première pluralité de fréquences.

5. Dispositif de balayage (100) selon la revendication 1, dans lequel le viseur (222.1) est conçu pour générer un indicateur visuel d'au moins un élément parmi :
des données du symbole lisible par machine (102) ;
une instruction pour le fonctionnement du dispositif de balayage (100) ;
un statut de décodage, parmi prêt à déclencher, occupé à décoder, décodage réussi et échec du décodage ;
une condition de décodage, parmi trop loin pour décoder et trop proche pour décoder.

6. Dispositif de balayage (100) selon la revendication 5, dans lequel le viseur (222.1) est conçu pour générer l'indicateur visuel en :
émettant une pluralité de couleurs pour signaler le statut de décodage ou la condition de décodage.

7. Dispositif de balayage (100) selon la revendication 1, dans lequel :
le viseur (222.1) et l'illuminateur (222.2) peuvent être conçus pour fonctionner simultanément.

8. Dispositif de balayage (100) selon la revendication 1, dans lequel le viseur (222.1) est conçu pour émettre un diagramme de lumière plein cadre comprenant un champ de vision complet du MRS (102).

9. Dispositif de balayage (100) selon la revendication 1, dans lequel le capteur d'imagerie (232) comprend :
un module de traitement de signal (235) conçu pour supprimer, du signal électrique, un élément de signal représentant la lumière de visée réfléchie.
